# EUROPEAN PATENT APPLICATION

(11) **EP 1 661 467 A1**
(43) Date of publication of application: **31.05.2006**
(21) Application number: 04771086.8
(22) Date of filing: 30.07.2004
(51) Int. Cl.: A23L 1/10, A23L 1/305

(54) **METHOD OF ENRICHING G-AMINOBUTYRIC ACID AND CEREAL OBTAINED BY THE METHOD**

(30) Priority: 04.08.2003 JP 2003286109
(71) Applicant: SATAKE CORPORATION, Chiyoda-ku, Tokyo 101-0021 (JP); Fancl Corporation, Kanagawa 231-8528 (JP)
(72) Inventor: SATAKE, Toshiko, 1010021 (JP); FUKUMORI, Takeshi, 1010021 (JP); KANEMOTO, Shigeharu, 1010021 (JP); HOU, Qing Liu, 1010021 (JP); SASAKI, Yasuhiro, 1010021 (JP); KAWANO, Motonobu, 1010021 (JP); SHINMURA, Hiroto, c/o Fancl Corporation, Yokohama-shi, Kanagawa244-0806 (JP); AOTO, Hiromichi, c/o Fancl Corporation, Yokohama-shi, Kanagawa244-0806 (JP); NAKAGAWA, Kota, c/o Fancl Corporation, Yokohama-shi, Kanagawa244-0806 (JP); ISHIWATA, Kenichi, c/o Fancl Corporation, Yokohama-shi, Kanagawa244-0806 (JP)
(74) Representative: Billington, Lawrence Emlyn
(86) International application number: PCT/JP2004/010926
(87) International publication number: WO 2005/011404

(57) **Abstract**

Water is slowly added to dry grain having a water content previously adjusted to 10% to 15% at a water addition rate of 0.5% to 2.0%/h, in order to provide a water content of 20% to 30%, and thereafter, the grain is placed into a tank, followed by tempering for 2 to 15 hours.

## Description

### BACKGROUND OF THE INVENTION

### Field of the Invention

The present invention relates to a method for enriching γ-aminobutyric acid and grain obtained by the method.

### Description of the Related Art

It has previously been known that a food material containing enriched γ-aminobutyric acid is obtained by immersing in water at least one member selected from the group consisting of rice germ, germ-containing rice bran, rice with germ, wheat germ, and wheat-germ-containing wheat gluten, under conditions consisting of a pH between 2.5 and 7.5 and a temperature of 50°C or lower (refer to Japanese Patent Application Laid-Open No. 7-213252, for example).

According to the aforementioned Japanese Patent Application Laid-Open No. 7-213252, it has been discovered that glutamic acid, which is a precursor substance of γ-aminobutyric acid, is contained at a high concentration in the surface portions of germ, rice grain, and wheat, and that such glutamic acid is rapidly converted to γ-aminobutyric acid when it is immersed in water.

However, in the method described in the aforementioned Japanese Patent Application Laid-Open No. 7-213252, since γ-aminobutyric acid is specifically enriched only in the germ portion or bran layer, such γ-aminobutyric acid is impaired during grain polishing. In addition, since germ or the like is immersed in water at 50°C or lower for approximately 8 hours, the growth of microorganisms is activatedafter such immersion, and there is a risk of causing putrefaction. In order to solve such problems, it is possible to apply a method of immersing brown rice in water containing dissolved oxygen of 20 ppm or more to enrich γ-aminobutyric acid (refer to Japanese Patent Application Laid-Open No. 2000-300196, for example), or a method of intermittently adding hot water at 50°C or lower to brown rice in a dark room using a hot water shower, without immersion in water, in order to adjust humidity and temperature, thereby preventing the undesirable odors caused by fermentation during germination (refer to Japanese Patent Application Laid-Open No. 2000-291423, for example).

However, the method described in the aforementioned Japanese Patent Application Laid-Open No. 2000-300196, which comprises immersing brown rice in water containing dissolved oxygen of 20 ppm or more to enrich γ-aminobutyric acid, has been problematic in that immersion is carried out for 16 hours while exchanging water every 6 hours to increase the dissolved oxygen, thereby causing complicated operations. Moreover, in the method described in the aforementioned Japanese Patent Application Laid-Open No. 2000-291423, which comprises intermittently adding hot water at 50°C or lower to brown rice using a hot water shower, in order to produce germed brown rice, since the water absorption rate of rice grain has not been considered, there has been a risk of causing grain break.

### DISCLOSURE OF THE INVENTION

Taking into consideration the aforementioned problems, it is a technical object of the present invention to provide a method of adding water to grain to suppress denaturation of such grain, such as grain break, thereby significantly enriching γ-aminobutyric acid contained therein, and to provide grain obtained by the above method.

In order to achieve the aforementioned object, the present invention relates to a technical means for slowly adding water to dry grain, the water content of which has previously been adjusted between 10% and 15%, at a water addition rate of 0.5% to 2.0%/h, in order to provide a water content of 20% to 30%; placing the grain into a tank; and tempering it for 2 to 10 hours.

By this technical means, when water is added to grain, the water addition rate is limited to 0.5% to 2.0%/h. Thus, the water absorption rate of grain becomes slow, and denaturation of the grain, such as grain break, is suppressed. At the same time, high physiological activity, utilization of the properties of germ with a high water absorption rate, and aerobic properties can be secured. Accordingly, as compared with the conventional method involving immersion in water, this technical means is able to significantly enrich γ-aminobutyric acid.

In addition, when water is added to the above described dry grain, cloudy water droplets having a particle diameter of 0.1 mm or less are attached to the surface thereof so that slow addition of water is carried out, thereby allowing the water content to shift from the surface of the grain to its interior.

Moreover, the above described hydrated grain may be tempered, while outside air may be introduced into the tank and ventilation may be provided.

Furthermore, a gramineous (glasslike) plant such as rice, wheat, or corn, may be used as the above described dry grain.

When brown rice is used as the above described dry grain, water may be added to the brown rice having a water content previously adjusted to approximately 14%, at a rate of less than 0.5%/h, until the water content thereof reaches 17%, and after the water content thereof exceeds 17%, the water addition rate may be gradually increased to a rate of 0.5% to 2.0%/h.

As statedabove, according to the present invention, water is slowly added to dry grain having a water content previously adjusted to 10% to 15% at a water addition rate of 0.5% to 2.0%/h, in order to provide a water content of 20% to 30%. Thereafter, the grain is placed into a tank, followed by tempering for 2 to 10 hours. Accordingly, when water is added to the grain, the water addition rate is limited to 0.5% to 2.0%/h, so that the water absorption rate of the grain becomes slow. Thus, while suppressing denaturation of the grain, such as grain break, γ-aminobutyric acid can be enriched in the albumen portion thereof. Thus, γ-aminobutyric acid enriched in the albumen portion is not damaged by grain polishing or the subsequent processing.

Accordingly, even when the grain is processed into the form of rice with germ, polished rice, or rice flour, γ-aminobutyric acid is maintained at a high concentration.

Moreover, since the aerobic properties of grain are maintained in this method, γ-aminobutyric acid can be significantly enriched, as compared with the conventional method involving immersion inwater. Incontrast, in the prior art technique, when γ-aminobutyric acid is generated only in the germ portion or bran layer of grain, such γ-aminobutyric acid is almost completely lost by rice polishing or processing (refer to Table 1 below).

Furthermore, when water is added to the above described dry grain, cloudy water droplets having a particle diameter of 0.1 mm or less are attached to the surface thereof so that slow addition of water is carried out. Thus, fine water droplets that are much more smaller than the water droplets provided by the conventional hot water shower are attached to the surface of the grain, and thereafter, the water content is uniformly absorbed into the cell tissues of the grain. Accordingly, denaturation of the grain, such as grain break, can be suppressed.

The hydrated grain obtained in that way is tempered, while outside air is introduced into the tank and ventilation is provided. Hence, an increase in the temperature in the tank is suppressed, in order to prevent degeneration of the grain, and at the same time, toxic gas generated in the tank can be eliminated.

When brown rice is used as the above described dry grain, water is added to the brown rice having a water content previously adjusted to approximately 14%, at a rate of less than 0.5%/h, until the water content thereof reaches 17%. After the water content thereof exceeds 17%, the water addition rate is gradually increased to a rate of 0.5% to 2 . 0%/h. Thus, the water absorption rate of the grain is suppressed until the water content of the brown rice reaches 17%, and denaturation of the grain, such as grain break, can be thereby prevented. When such brown rice water content exceeds 17%, the water absorption rate is increased, so that grain containing enriched γ-aminobutyric acid can be obtained in a shorter time than is usual.

### BRIEF DESCRIPTION OF THE DRAWINGS

FIG. 1 is a process chart showing one embodiment of a method of enriching GABA;
FIG. 2 is a view showing the relationship between the water content of brown rice and a water addition rate;
FIG. 3 is a schematic front view of a device for carrying out the method of enriching GABA;
FIG. 4 is a schematic side view of a water-spraying device;
FIG. 5 is a view showing a comparison between normal white rice and the functional white rice of the present invention in terms of GABA content in albumen in the case of a polished rice yield of 90%;
FIG. 6 is a view showing a comparison between normal white rice and the functional white rice of the present invention in terms of magnesium content in albumen in the case of a polished rice yield of 90%;
Figure 7 is a view showing a comparison between commercially available wheat flour F and the wheat flour of the present invention in terms of GABA content; and
Figure 8 is a view showing a comparison between the case of subjecting corn grains to an immersion treatment and the case of subjecting corn grains to a spraying treatment, in terms of the amount of GABA generated.

### DETAILED DESCRIPTION OF THE PREFERRED EMBODIMENTS

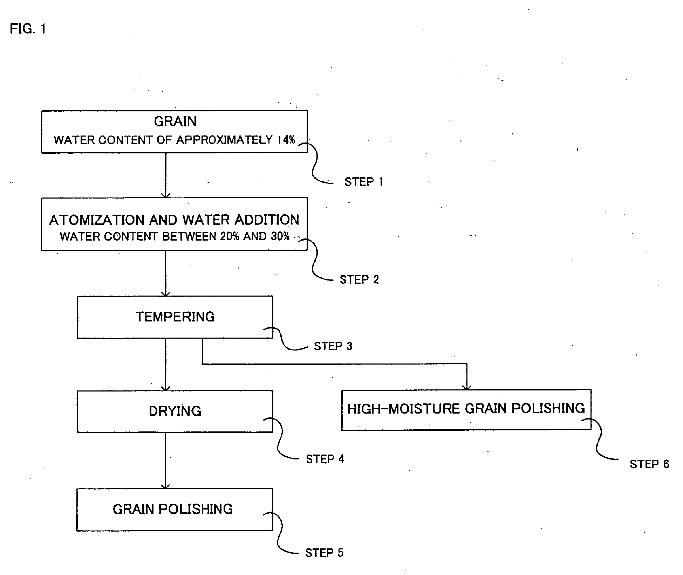

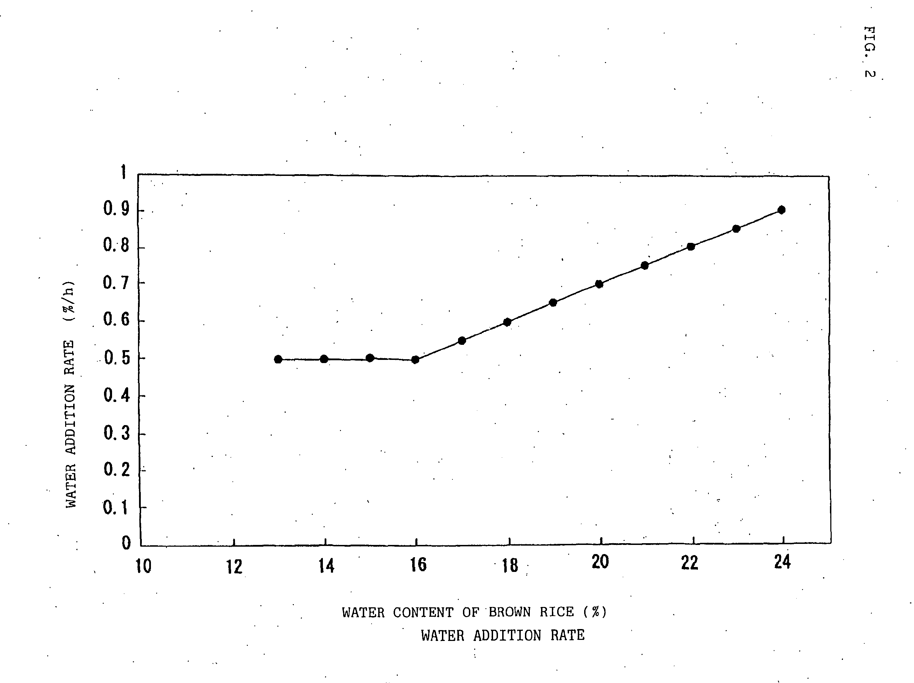

FIG. 1 is a process chart showing one embodiment of a method of enriching γ-aminobutyric acid (hereinafter referred to as "GABA"). FIG. 2 is a view showing the relationship between the water content of brown rice and a water addition rate.

Hereafter, the method of enriching GABA of the present invention will be described with reference to FIGS. 1 and 2. With regard to grain used as a raw material, gramineous (glasslike) plants such as rice, wheat or corn, or cereals containing a large amount of protein, such as soybeans, can be used. When brown rice is used as such grain, for example, dry grain having a water content previously adjusted to approximately 14% is used (step 1 in FIG. 1). Subsequently, water is slowly added to such a raw material, resulting in a water content between 20% and 30% (step 2 in FIG. 1). In order not to cause denaturation of grain, such as grain break, with regard to such a treatment to slowly add water to grain, water is added to the grain at a rate of increasing the water content of the grain to 0.5% per hour (0.5%/h), until the water content thereof reaches 17%. After the water content thereof exceeds 17%, the water addition rate is gradually increased, and water is added at a rate between 0.5% and 2.0%/h (see FIG. 2). It is desired that a preferred water addition method comprise spraying water to form cloudy water droplets and attaching the water droplets on the surface of brown rice. The diameter of such a cloudy water droplet is preferably set at 0.1 mm or less.

After completion of such water addition, the grain is transferred into a tank or the like, and tempering (which means an operation to leave grain for a certain period of time in order to achieve the equilibration of the water added to the grain) is then carried out for 2 to 10 hours (step 3 in FIG. 1). The optimum environmental temperature is between 16°C and 24°C during such tempering. If outside air is introduced into the tank and ventilation is provided, the environment becomes more preferable. The temperature of water is the same as the temperature of running water, and it is unnecessary to adjust the pH thereof. A series of operations can be sufficiently carried out at a room temperature of approximately 20°C. After completion of the tempering, the grain is dried by a conventional drying method, until it has a water content suitable for rice polishing (step 4 in FIG. 1). Thereafter, it is possible to apply a rice polishing method (step 5 in FIG. 1) or a method of polishing the rice while maintaining a high water content of the grain after completion of the tempering (step 6 in FIG. 1). Otherwise, it may also be possible that the grain after completion of the tempering be heated as appropriate, without grain polishing, in order to process it in the form of parboiled rice or pregelatinized rice.

In the case of the grain obtained in that way, a GABA content and a magnesium content in the albumen thereof at a polished rice yield of 90% are significantly higher than those of normal white rice.

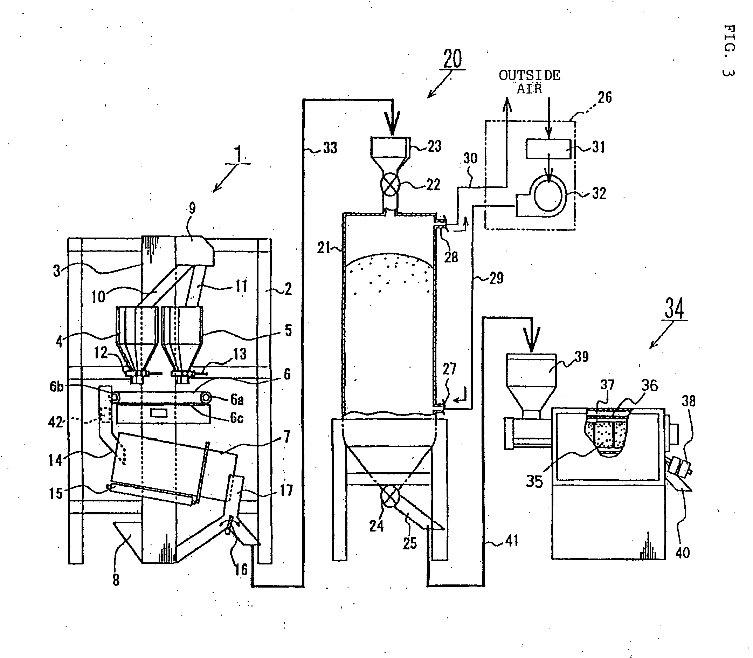

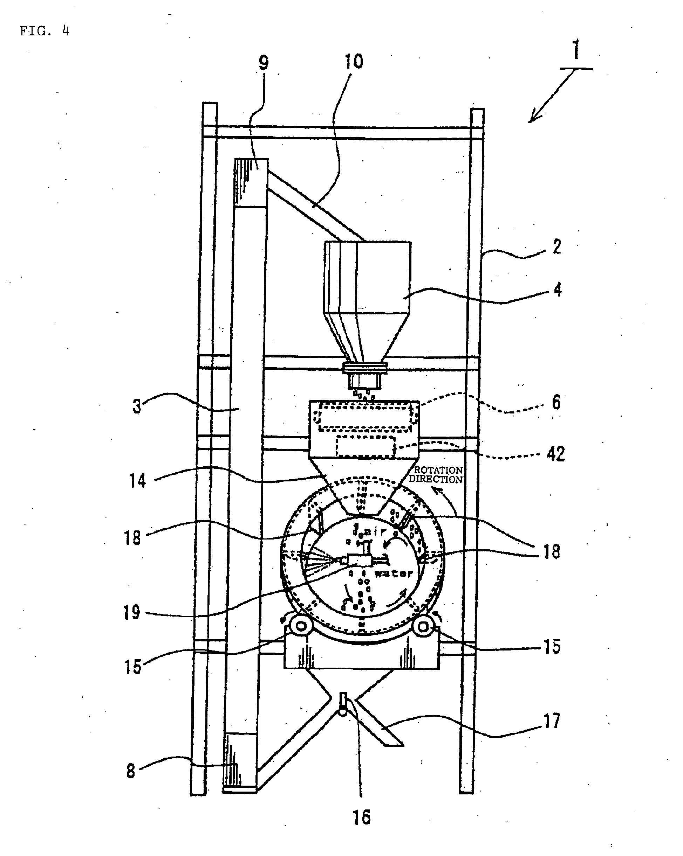

Subsequently, an example of a device for carrying out the method of enriching GABA will be described with reference to FIGS. 3 and 4. FIG. 3 is a schematic front view showing a device for carrying out the method of enriching GABA. FIG. 4 is a schematic side view showing a water-spraying device.

In FIG. 3, reference numeral 1 denotes a water-spraying device. The water-spraying device 1 comprises, as main components, a grain elevator 3 provided in a machine casing 2, dual storage tanks 4,5 for storing the grain elevated by the grain elevator 3, a belt conveyor 6 for transporting the grain discharged from the storage tanks 4,5 in the form of a layer, and a rotary barrel 7 for adding water to the grain transported by the belt conveyor 6.

A raw material-supplying hopper 8 for supplying grain as a rawmaterial is provided at the bottom of the grain elevator 3, and a falling gutter 9 equipped with a bidirectional valve is provided at the top of the grain elevator 3. In the above falling gutter 9, a supply pipe 10 directed towards the storage tank 4 and a supply pipe 11 directed towards the storage tank 5 are provided. At the bottom of the storage tanks 4,5, an opening and closing shutters 12,13 are provided, whereby the grain is fallen at an appropriate flow rate.

The belt conveyor 6 is formed by winding an endless conveyor belt 6c aroundapair of sprockets 6a, 6b. A supplying gutter 14 for supplying grain into the rotary barrel 7 is provided at the transportation terminating portion of the belt conveyor 6. In the supplying gutter 14, a water content sensor 42 for surveying the water content of grain before being supplied into the rotary barrel 7 is provided. The type of this water content sensor 42 is not particularly limited, as long as it is able to precisely measure the water content of grain. Examples of such a water content sensor may include an electric resistance type, a capacitance type, and a near infrared radiation type.

The surrounding portion of the above rotary barrel 7 is supported by a plurality of motor rollers 15 in a rotatable manner. In addition, in the rotary barrel 7, the grain supplying side is disposed at a higher position, and the grain discharging side is disposed at a lower position. On the grain discharging side of the rotary barrel 7, there is provided a discharging gutter 17 equipped with a switching valve 16 for discharging the grain in order to use it to the next step or for circulating the grain to the water-spraying device 1.

Referring to FIG. 4, a plurality of impellers 18 are provided on the internal surface of the above rotary barrel 7 along the direction of the length thereof. When grain is supplied into the rotary barrel 7, the grain is lifted up by the impellers 18 as a result of the rotation of the barrel 7, and it is then fallen immediately before reaching the upper portion, so that the grain can be stirred. An atomizer 19 is provided in the barrel 7. As such an atomizer 19, a two-phase flow nozzle for atomizing a liquid utilizing a high-speed flow such as compressed air, or a device for atomizing a liquid into the form of particles with a diameter of 0.1 mm or less by ultrasonic wave oscillation and then suspending the particles in the air current in the form of fog using a fan, can also be adopted. In the present embodiment, a two-phase flow nozzle for generating fine fog with a mean particle diameter between 10 and 50 µm was used as the atomizer 19 (for example, model BIMV02, manufactured by Ikeuchi Company).

In FIG. 3, reference numeral 20 denotes a tempering tank. This tempering tank comprises a tank portion 21, a supplyvalve 22 provided at the upper portion of the tank portion 21, a supply hopper 23 that is connected with the supply valve 22, a discharge valve 24 provided at the bottom portion of the tank portion 21, a discharge gutter 25 that is connected with the discharge valve 24, and a ventilator 26 for taking fresh air such as outside air into the tank portion 21. An air incorporating port 27 and an air discharging port 28 are provided on the tank portion 21. The above ports are connected with the above ventilator 26 via circulation pathways 29,30, respectively. The ventilator 26 has a simple structure, which comprises a dust preventive filter 31 for eliminating dusts from outside air and a fan 32 for aspirating fresh outside air and supplying it to the tank portion 21. For example, ventilation can be carried out in the tank portion 21 at an air quantity of 6 m³/ton·h. Reference numeral 33 denotes a transportation means for connecting the water-spraying device 1 in the previous step with the tempering tank 20.

Moreover, in FIG. 3, reference numeral 34 denotes a grain polisher. This grain polisher comprises a polishing trochanter 35, which is attached to a main axis (not shown in the figure) and has a polishing roll, and a bran-removing polishing tube 3 6 having a porous wall, which is provided around the above polishing trochanter 35. A polishing chamber 37 is provided in a space between the polishing trochanter 35 and the bran-removing polishing tube 36. Also, a discharge port (not shown in the figure) is provided at the end portion of the polishing chamber 37. Moreover, an external resistance 38 comprising a resistance board for pressing towards the above discharge port and an anchor is provided. Reference numeral 39 denotes a supply hopper of the grain polisher 34, reference numeral 40 denotes a polished product-discharging gutter of the grain polisher 34, and reference numeral 41 denotes a transportation means for connecting the tempering tank 20 in the previous step with the grain polisher 34.

Hereafter, the actions of the devices shown in FIGS. 3 and 4 will be described. Grain used as a raw material having a water content previously adjusted to approximately 14%, is supplied from the raw material-supplying hopper 8. The grain is elevated by the grain elevator 3, and it is then stored in the storage tanks 4,5. Thereafter, the grain discharged from the storage tanks. 4, 5 is transported by the belt conveyor 6 in the form of a layer, and it is then supplied into the rotary barrel 7 via the supplying gutter 14. The rotary barrel 7 rotates at a rate of 6 to 12 revolutions/minute in order to stir the grain, and at the same time, water is added by the atomizer 19 in the form of fine fog with a mean particle diameter between 10 and 50 µm. During this step, water is added, while the water content of the grain is surveyed by the water content sensor 42 provided in the supplying gutter 14. That is to say, water is added, while the grain is circulated via the grain elevator 3. Thus, water is added to the grain at a water addition rate of 0.5%/h until the water content thereof reaches 17%. After the water content thereof exceeds 17%, the water addition rate is gradually increased to a rate of 0.5% to 2.0%/h. When the water content reaches 20% to 30%, circulation of the grain is terminated, in order to terminate the water addition, and the grain is discharged from the discharging gutter 17.

Thereafter, the grain having a water content between 20% and 30% is supplied to the supply hopper 23 of the tempering tank 20 by the transportation means 33. The grain supplied to the supply hopper 23 is accumulated and stored in the tank portion 21 by opening the supply valve 22. The grain accumulated and stored in this way is then subjected to tempering for 2 to 15 hours. The optimum environmental temperature applied during such tempering is between 16°C and 24°C. In order to incorporate outside air into the tankportion 21, the ventilator 26 may be operated, in order to carry out ventilation. That is, when the fan 32 is operated, outside air, from which dusts have been removed by the dust preventive filter31, is incorporated, and the outside air is then supplied to the tank portion 21 via the circulation pathway 29. The air is then discharged from the tank portion 21 via the circulation pathway 30. Herein, the air quantity is 6 m³/ton.h or less, for example. After completion of the tempering, the grain is discharged from the tempering tank 20 by the discharge valve 24 through the discharge gutter 25.

The grain tempered in the tempering tank 20 is supplied to the supply hopper 39 of the grain polisher 34 by the transportation means 41, followed by grain polishing. That is to say, the embodiment shown in FIG. 3 indicates a method for directly polishing the grain with a high water content (a water content between 20% and 30%) obtained after completion of the tempering (refer to step 6 in FIG. 1). However, the grain polishing method is not limited thereto, and a commercially available grain-drying machine may be provided as a pre-step of the grain polisher 34. The tempered grain with a high water content is supplied to the polishing chamber 37 of the grain polisher 34, and it is then polished by the polishing trochanter 35. In addition, since the discharge port of the polishing chamber 37 is compressed by the external resistance 38, the inside of the polishing chamber 37 becomes a moderately high-pressure state, so that a bran layer or germ can be peeled, thereby conducting grain polishing.

In the case of the grain obtained in that way, when a white rice yield is 90%, for example, a GABA content and a magnesium content in albumen are significantly increased, as compared with normal white rice.

### Example 1

Brown rice was used as a rawmaterial, and the water content thereof had previously been adjusted to approximately 14%. Thereafter, slow water addition was carried out, in order to provide a water content of 20% to 30%. In order not to cause rice break, such a slow water addition treatment was carried out at a rate of 0.5%/h, until the water content reached 17%. After the water content exceeded 17%, the water addition rate was gradually increased to a rate of 0.5% to 0.9%/h. As such water to be added, drinkable water such as running water, distilled water, well water, acidic water, or electrolytic saline water, is preferable. In particular, when sterilization is also intended, a hypochlorite solution having an effective chlorine concentration between 0.1 ppm and 50 ppm may also be used. A preferred water addition method comprises sprayingwater, in order to add cloudywater droplets onto the surface of brown rice. The diameter of such an atomized water droplet was set at 0.1 mm or less. After completion of such water addition, the brown rice was transferred into a tank or the like, followed by tempering for 2 to 10 hours. The optimum environmental temperature during such tempering was set between 16°C and 24°C, and outside air was introduced into the tank for ventilation. As a water temperature, the temperature of running water was applied. The control of a pH thereof was not necessary. A series of operations were carried out at a room temperature of approximately 20°C. After completion of the tempering, the brown rice or husk was dried by a conventional drying method, until the water content thereof was adjusted to a degree suitable for hulling and polishing. Thereafter, the brown rice or husk was subjected to hulling and polishing,

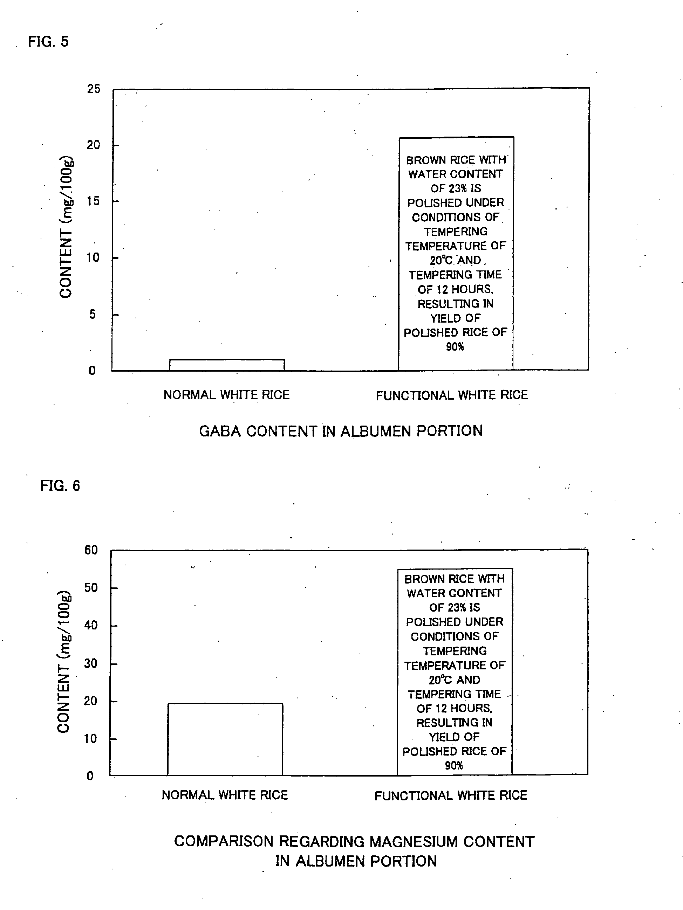

In the case of the polished rice obtained in that way, when a yield was 90%, the GABA content in the albumen thereof was approximately 20 times increased, as compared with that of normal white rice (see FIG. 5). The magnesium content in the albumen thereof was approximately 3 times increased, as compared with that of normal white rice, when a yield was 90% (see FIG. 6).

### Example 2

Brown rice ("*Hoshinoyume"* or "*Kirara"*) was used as a raw material, and the water content thereof had previously been adjusted to approximately 14%. Thereafter, slow water addition was carried out, in order to provide a water content of 20% to 30%. In order not to cause rice break, such a slow water addition treatment was carried out at a rate of 0.5%/h, until the water content reached 17%. After the water content exceeded 17%, the water addition rate was gradually increased to a rate of 0.5% to 0. 9%/h. As such water to be added, running water or distilled water is preferably used. When sterilization is also intended, a hypochlorite solution having an effective chlorine concentration between 0.1 ppm and 50 ppm may also be used. A preferred water addition method comprises spraying water, in order to add cloudy water droplets onto the surface of brown rice. The diameter of such an atomized water droplet was set at 0.1 mm or less. After completion of such water addition, the brown rice was transferred into a tank or the like, followed by tempering for 2 or 3 hours. The optimum environmental temperature during such tempering was set between 16°C and 24°C, and outside air was introduced into the tank for ventilation. As a water temperature, the temperature of running water was applied. The control of a pH thereof was not necessary. A series of operations were carried out at a room temperature of approximately 20°C. After completion of the tempering, the brown rice or husk was subjected to evaporation by heating at 130°C for 3 minutes. It was then dried by a conventional drying method, until the water content thereof was adjusted to a degree suitable for hulling and polishing. Thereafter, the brown rice or husk was subjected to hulling and polishing.

In the case of the polished rice obtained in that way, when a yield was 90%, the GABA content thereof was 4.3 times in the albumen portion thereof, the GABA content in the germ potion thereof was 4.4 times, and the GABA content in the bran layer portion thereof was 1.2 times increased, as compared with the case where no enrichment treatment was carried out (refer to Table 1). In terms of the disintegration rate of rice grain obtained in the case where the obtained brown rice was immersed in water for 24 hours, the present production method was compared with the conventional production method of immersing grain in water for enrichment. As a result, it was found that the disintegration rate of the conventional production method was 79% whereas that of the present production method was 10%. Accordingly, using the present production method, the form of rice can be maintained even during rice boiling, and as a result, brown rice that is excellent in terms of appearance and taste, having only a slight extent of elution of starch, can be obtained.

**[Table 1]**

| Rice portion | γ-aminobutyric acid content (mg/100 g) | |
|---|---|---|
| | With enrichment treatment | Without enrichment treatment |
| Bran layer portion | 1.5 | 1.3 |
| Germ portion | 2.2 | 0.5 |
| Albumen portion | 8.6 | 2.0 |

### Example 3

Wheat grain was used as a raw material, and the water content thereof had previously been adjusted to approximately 12%. Thereafter, slow water addition was carried out, inorder to provide a water content of 21% to 25%. In order not to cause denaturation of the wheat grain, such a slow water addition treatment was carried out by the aforementioned spray method at a water addition rate of 1.0% to 2.0%/h, until the water content reached 21% to 30%. As such water to be added, running water was used. After completion of such water addition, the wheat grain was transferred into a tank or the like, followed by tempering for 3 to 10 hours The optimum environmental temperature during such tempering was set between 7°C and 13°C, and outside air was introduced into the tank for ventilation. After completion of the tempering, the wheat grain was dried by a conventional drying method, until the water content thereof was adjusted to a degree suitable for milling. Thereafter, the wheat grain was subjected to milling.

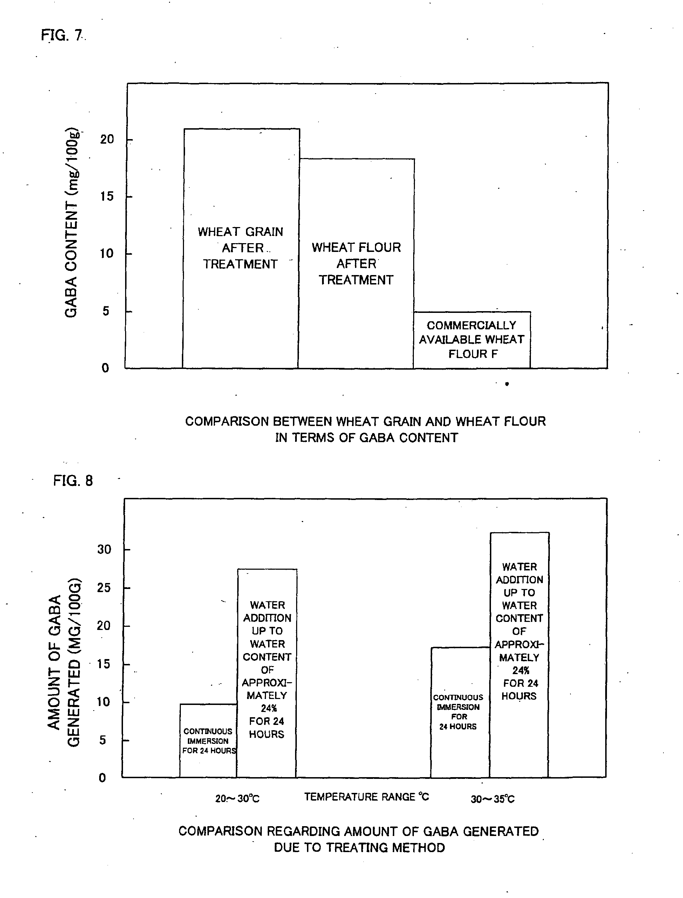

When the wheat flour obtained in that way was compared with commercially available wheat flour F, the GABA content was approximately 3.8 times increased (see FIG. 7).

### Example 4

Corn grain was used as a rawmaterial, and the water content thereof had previously been adjusted to approximately 14%. Thereafter, slow water addition was carried out, in order to provide a water content of 15% to 30%. In order not to cause denaturation of the corn grain, such a slow water addition treatment was carried out by the aforementioned spray method at a water addition rate of 1.2% to 2.0%/h. As such water to be added, running water was used. After completion of such water addition, the corn grain was transferred into a tank or the like, followed by tempering for 5 to 15 hours. The optimum environmental temperature during such tempering was set between 10°C and 30°C, and outside air was introduced into the tank for ventilation. After completion of the tempering, the corn grain was dried by a conventional drying method, until the water content thereof was adjusted to a degree suitable for hulling, germ removal, milling, and grinding. Thereafter, the corn grain was subjected to hulling, germremoval, milling, and grinding.

When the corn grain obtained in that way was compared with corn grain obtained by continuous immersion, the GABA content was approximately 1.9 to 2.3 times increased (see FIG. 8).

## Claims

1. A method for enriching γ-aminobutyric acid contained in grain, comprising:
slowly adding water to dry grain having a water content previously adjusted to 10% to 15% at a water addition rate of 0.5% to 2.0%/h, in order to provide a water content of 20% to 30%; and
placing the grain into a tank and tempering it for 2 to 15 hours.

2. The method for enriching γ-aminobutyric acid according to claim 1, wherein when water is added to said dry grain, cloudy water droplets having a particle diameter of 0.1 mm or less is attached to the surface thereof so that slow addition of water becomes possible.

3. The method for enriching γ-aminobutyric acid according to claim 1 or 2, wherein said hydrated grain is tempered, while outside air is introduced into the tank and ventilation is provided.

4. The method for enriching γ-aminobutyric acid according to any one of claims 1 to 3, wherein a gramineous (grasslike) plant such as rice, wheat, or corn, is used as said dry grain.

5. The method for enriching γ-aminobutyric acid according to any one of claims 1 to 4, wherein when brown rice is used as said dry grain, water is added to the brown rice having a water content previously adjusted to approximately 14%, at a rate of less than 0.5%/h, until the water content thereof reaches 17%, and after the water content thereof exceeds 17%, the water addition rate is gradually increased to a rate of 0.5% to 2.0%/h.

6. Grain containing enriched γ-aminobutyric acid, which is obtained by enriching γ-aminobutyric acid contained in the grain by the method according to any one of claims 1 to 5, and then polishing the grain.

7. Grain which contains 8 mg/100 g or more of γ-aminobutyric acid in the albumen portion thereof.
